Europäisches Patentamt

European Patent Office

Office européen des brevets

(11) Publication number: **0 305 499 B1**

# EUROPEAN PATENT SPECIFICATION

(45) Date of publication of patent specification: **16.09.92**   (51) Int. Cl.⁵: **A23L 1/05**, A23L 1/187, A23L 1/39, A23L 1/40

(21) Application number: **88903498.9**

(22) Date of filing: **24.02.88**

(86) International application number: **PCT/US88/00591**

(87) International publication number: **WO 88/06847 (22.09.88 88/21)**

(54) COMPOSITIONS OF STARCH AND METHYLCELLULOSE ETHERS AS HIGH TEMPERATURE THICKENERS.

(30) Priority: **11.03.87 US 24450**

(43) Date of publication of application:
**08.03.89 Bulletin 89/10**

(45) Publication of the grant of the patent:
**16.09.92 Bulletin 92/38**

(84) Designated Contracting States:
**AT BE CH DE FR GB IT LI NL SE**

(56) References cited:
**GB-A- 1 081 567       US-A- 3 251 531
US-A- 3 399 062       US-A- 3 619 208
US-A- 3 857 976       US-A- 3 899 602
US-A- 3 904 601       US-A- 3 969 340
US-A- 3 970 767       US-A- 4 192 900
US-A- 4 415 599       US-A- 4 568 555
US-A- 4 597 974       US-A- 4 623 552**

**Methocel I "Instroduction to Thermal Gelling Methocel Cellulose Ether Derivatives for the Food Industry, Dow Chemical Company 1974**

(73) Proprietor: **THE DOW CHEMICAL COMPANY
2030 Dow Center Abbott Road P.O. Box 1967
Midland Michigan 48640-1967(US)**

(72) Inventor: **COFFEY, Donald, G.
5211 Plainfield Street
Midland, MI 48640(US)**

(74) Representative: **Burford, Anthony Frederick et al
W.H. Beck, Greener & Co. 7 Stone Buildings
Lincoln's Inn
London WC2A 3SZ(GB)**

Rank Xerox (UK) Business Services

EP 0 305 499 B1

**Description**

This invention concerns specific starch/methylcellulose compositions which are capable of imparting desirable texture and viscosity properties to food products that have been thickened with the mixture and which have been subjected to high temperatures.

Many food products are fluids that have historically been thickened with starches. Some examples of foods in this group include gravies, sauces, stews, cream soups, pie fillings, puddings, and the like. A number of these products are intended to be served at high temperatures. A problem that exists in traditional starch thickened fluid foods is a loss of viscosity upon heating to and holding at the high serving temperatures. This loss of viscosity upon heating poses problems for food manufacturers because viscosity is one of the most important sensory attributes of these food products. The products must have a fairly high viscosity at serving temperatures in order to receive consumer acceptance.

Similar to starch thickened systems, foods thickened with food approved gums lose viscosity when heated to and held at elevated temperatures. Food products which are designed with gums to yield adequate viscosity at high temperatures suffer from several drawbacks. First, food products which exhibit adequate high-temperature viscosity generally exhibit undesirably high low-temperature viscosities. Secondly, such food products generally exhibit undesirable sensory characteristics such as gumminess, thickness, and ropiness.

Attempts have been made to try to obtain a starch based thickening composition which would impart the desirable viscosity properties to food products at elevated serving temperatures. USA-4,597,974 discloses a mixture of rice starch and carob-bean flour as the components of a food product thickener, the reference does not disclose the use of any cellulose derivatives.

US-A-3,969,340 and US-A-3,970,767 disclose certain blends of starch and amylose starches which have been hydroxypropylated and inhibited to a specific degree in order to impart specific viscosity properties to the starches. The blends are disclosed as being able to impart thickening properties to food products prepared under retort conditions.

METHOCEL I "Introduction to Thermal Gelling Methocel Cellulose Ether Derivatives for the Food Industry" (Dow Chemical company 1974) disclosed that methylcellulose and hydroxypropyl methylcellulose are reversible thermal gelling agents exhibiting sharp increases in viscosity on heating and corresponding decrease on subsequent cooling.

US-A-3399062 disclosed the production of an edible starch-based food product containing a reversible thermally gellable cellulose ether such as methylcellulose, hydroxypropyl methylcellulose, hydroxyethyl methylcellulose and ethyl hydroxyethylcellulose.

US-A-3215531 disclosed the maintenance or restoration of appearance and texture of a food product by mixing starch with a solution of a heat resistant hydrophilic colloid, such as methylcellulose, which does not become fluid on heating.

In order to overcome the deficiency of starch thickened systems, manufacturers have found it necessary to add high levels of starch to the food products. This causes the problem of excessive viscosity at the low temperatures at which many of the food products are processed and packaged. Food manufacturers and the consumer would both benefit from food products that exhibit less of a viscosity loss or even a viscosity increase on heating. Manufacturers could gain processing efficiencies and consumers could have access to foods which show a stable viscosity response to serving temperatures.

The present invention concerns a food thickening composition comprising a blend of (1) a starch and (2) a methylcellulose ether, wherein the ratio of the starch to methylcellulose ether is such that, when the blend of starch and methylcellulose ether is used in amounts up to about 5 percent by weight of a total food product, the viscosity of the thickened food product at an elevated temperature is substantially equal to or greater than the viscosity of the thickened food product prior to the food product being heated to the elevated temperature.

The composition of the present invention exhibits the unexpected characteristic of maintaining or increasing the viscosity of a solution when heat is applied to the solution, unlike starch alone which tends to show a loss of thickening properties when subjected to extended periods of elevated temperatures. By a careful choice of the methylcellulose used in the blended composition, thickened systems may be designed which maintain or increase the viscosity of food products at elevated temperatures. Food processors could take advantage of this choice to design food products that exhibit fairly stable or increasing viscosity value during heating which would be more appealing and more palatable to consumers. Consumers would also benefit from foods that were easier to prepare and more palatable over a wider range of temperatures.

The present invention provides such a means to provide food products which have been designed to yield stable or increasing viscosities during heating. This will allow manufacturers to design food products which exhibit desirable rheological characteristics at specific temperatures without compromising the rheology at lower or higher temperatures.

Those food products which may be thickened by the present invention include any edible food product which desirably exhibits a thickening upon heating of the food product. Examples of such food products include soups, sauces, syrups, cheese spreads, batters, dressings, jellies, jams and the like. The food products which are useful in the present invention must be compatible with starch based and cellulose ether based thickening compositions.

By the term "food product" as used herein is meant an edible food composition which has not been contacted with the thickening composition of the present invention. By the term "thickened food product" is meant any food product which has been contacted with the thickening composition of the present invention.

The starches used in the present invention are those varieties which are known as food approved starches. Such food approved starches include unmodified and modified glucose polymers of vegetable origin. Examples of suitable food starches include corn, wheat, sorghum, rice, casaba, potato, arrowroot, sago palm and mixtures thereof. Preferably, a corn starch is used in the present invention. Of the preferred corn starches, the most preferred include those crosslinked or substituted. Such food starches typically impart a thickening characteristic to the food products to which they are added.

The starch used in the present invention can be any of the above-mentioned food starches in either its native or modified form. Native starches are produced by extraction from: the seeds of such plants as corn, wheat, sorghum or rice; the tuber, or roots, of plants like casaba, potato or arrowroot; and the pith of the sago palm. The starch can be either pre-gelatinized or non-gelatinized. If the starch is non-gelatinized, the preparation process of the invention must have a heating step which must be sufficient to effect gelatinization during the preparation of the thickening composition. Some examples of suitable starches are unmodified, unsubstituted corn starch; instantized, unsubstituted corn starch; instantized, hydroxypropylated corn starch; and instantized, succinylated corn starch.

Exemplary food starches include those available as Thin-n-Thik™ 99, Sta-Mist™ 365, Kol Guard™, and Mira-Thik™, available from A. E. Staley Company, Decatur, Illinois.

The amount of starch which is used in formulating the present thickening composition is that amount which is effective to impart the desired thickening properties to the food product to be thickened. The starch is desirably used in an amount which results in a thickened food product which exhibits a viscosity of at least about 100 percent of the viscosity of the thickened food product prior to being heated to the elevated temperature. More preferably, the starch is used in an amount which results in a thickened food product which exhibits a viscosity of at least about 125 percent, most preferably 150 percent, of the viscosity of the thickened food product prior to being heated to the elevated temperature. This amount may range from 3 to 7 percent of the total weight of the food product to be thickened. Preferably, the amount of starch used ranges from 4 to 6 percent of the total weight of the food product to be thickened.

Methylcellulose ethers used in this invention are a class of cellulose ethers which have long been used in many industries as viscosity control agents, emulsifiers, and binding agents. The cellulose ethers are unique in that, at concentrations of 2 percent or more in water, they undergo thermal gelation. In essence, as the temperature of the solution of cellulose ethers increases, the polymer chains dehydrate to some extent and crosslink, forming a gel network. The gel formation is reversible upon the cooling of the solution of cellulose ether. At lower levels of concentration it is observed that the cellulose ethers respond like other hydrophilic materials in that the viscosity of the solution decreases with increasing temperature. In the practice of the present invention a particular methylcellulose ether is found to exhibit unexpected thickening properties when combined with starch to form a thickening composition. The particular methylcellulose ethers of the present invention help a solution to unexpectedly maintain or increase the viscosity of the solution upon heating when compared to the performance of other thickening compositions, particularly those using other types of cellulose ethers.

The methylcellulose used in the present invention may be prepared by any of a number of known methods. Generally, methylcellulose is prepared by the formation of an alkali cellulose by the addition of sodium hydroxide to a slurry of cellulose floc in a diluent. The alkali cellulose is then reacted with an alkyl halide, such as methyl chloride, under pressure. Thereafter, the slurry is neutralized and the product is extracted, dried and ground.

The methylcellulose ethers which are useful in the present invention are those which when combined in particular amounts and ratios with various starches impart a thickening property to food products which is maintained even at elevated temperatures. The amounts, ratios, and degree of thickening properties imparted to the food products by the thickening composition of the present invention are delineated in subsequent paragraphs.

The particular methylcellulose ethers which are useful in the present invention include those which, when in a 2 percent aqueous solution, exhibit a viscosity at 20°C ranging from 3 to 3,500 cps (mPa.s). Preferably, the 2 percent aqueous solution at 20°C exhibits a viscosity ranging from 10 to 1.000 cps (mPa.s) and most preferably from 15 to 500 cps (mPa.s). Such viscosities are measured by conventional methods using Ubbelohde capillary tubes.

The molecular weights of such methylcellulose ethers range from 10,000 to 1,000,000, more preferably from 50,000 to 500,000 and most preferably from 80,000 to 400,000.

Examples of methylcellulose ethers include those commercially available as METHOCEL™, available from The Dow Chemical Company, Metolose™ and Pharmacoat™, available from the Shinetsu Chemical Company, Tokyo, Japan.

The amount of methylcellulose ether used in the present thickening composition is such that the viscosity of the thickened food product will be substantially maintained or increased when the food product is heated from a temperature ranging from 15 to 25°C to an elevated temperature ranging from 40 to 100°C, preferably from 40 to 95°C. By "substantially maintained" is meant that the viscosity of the food product containing the present thickening composition, after heating to an elevated temperature, will be at least 100 percent of the viscosity of the thickened food product prior to heating to the elevated temperature. Preferably, the thickened food product at the elevated temperature exhibits a viscosity which is at least 125 percent of the viscosity of the thickened food and most preferably 150 percent of the viscosity of the thickened food product prior to heating to the elevated temperature.

Preferably, the methylcellulose ether is used in amounts ranging from 0.25 to 1.5 percent based on the total weight of the food product. Most preferably, the methylcellulose ether is used in amounts ranging from 0.5 to 1.0 percent based on the total weight of the food product to be thickened.

The starch and methylcellulose comprising the thickening composition are usually used in total amounts ranging up to 5 percent of the total weight of the food product to be thickened. The ratio of starch to methylcellulose ether is such that, when used in amounts up to 5 percent by weight of the food product, the viscosity of the thickened food product at the elevated temperature is at least 100, especially at least 200, percent of the viscosity of the food product prior to being thickened and heated to the elevated temperature. Preferably, the ratio is such that the viscosity of the thickened food product at the elevated temperature is at least 400 percent of the viscosity of the food product prior to thickening and heating. Most preferably, the ratio is such that the viscosity of the thickened food product at the elevated temperature is at least 600 percent of the viscosity of the food product prior to thickening and heating. Ratios of starch to methylcellulose ethers which will give the desired viscosity characteristics range from 2:1 to 28:1, preferably 4:1 to 12:1.

The thickened food products at the elevated temperature exhibit a viscosity ranging from 2,000 to 25,000 cps (mPa.s). More preferably, the viscosity of the thickened food product at the elevated temperature ranges from 3,000 to 18,000 cps (mPa.s) and most preferably, from 4,000 to 13,000 cps (mPa.s)

The particular thickening compositions of the present invention may be formulated by any of the known methods for dry blending materials such as starch and methylcellulose ethers. The order of mixing is not critical. It is desirable that the blend be as uniformly mixed as possible to insure a uniform dispersion of the thickening composition in the food product to be thickened.

In order to insure the uniform thickening of the food product it is important that the thickening composition be uniformly distributed throughout the food product to be thickened. This may be accomplished by the thorough mixing of the food product after the addition of the thickening compostion.

The following comparative examples are included for purposes of comparison and are not intended as an illustration of the present invention.

## Comparative Example 1

For the purpose of comparison only, a sample of a thickening composition based on starch only was prepared by the following procedure and tested for its ability to impart high temperature viscosity properties to a solution.

5 Grams of a 3:1 ratio of Thin-n-Thik™ 99 and Sta-Mist™ 365 modified starch was dispersed by stirring in 95 g of water at 20°C in a 1-liter beaker. The dispersion was then heated to 95°C for a period of time sufficient to insure the gelatinization of the starch granules, about ten minutes. The solution was allowed to cool to room temperature (20°C), placed in a sealed jar, and allowed to stand overnight at room temperature to allow the solution to come to a viscosity equilibrium. The viscosity of the solution was then measured by rotational viscometry using a Brookfield RVT Rotational Viscometer set at 2.5 rpm and using a No. 3 spindle. The data was reported under Example C-1 in Table I. The jar of solution was then immersed in a water bath set at 40°C and allowed to equilibrate at the water bath temperature for a period of 3 hours.

The viscosity of the solution was then measured in the same manner as discussed above with regard to the solution at room temperature. The data is reported under Example C-1 in Table I. The viscosity of the solution was measured in a similar manner for solutions which have been immersed in water baths set at 60°, 80° and 95°C. The results are reported under Example C-1 in Table I.

In a similar manner, the procedure of Comparative Example 1 was repeated except that, instead of 5 g of modified starch, 3.9 g of Kol Guard™ starch was used. The viscosity of the solution was measured in the same manner and the results are reported in Table I under Example C-1A.

The data illustrate that thickening systems based on starch alone are not able to maintaining the viscosity of the thickened system at elevated temperatures.

Comparative Example 2

For the purpose of comparison only, a sample of a thickening composition based on methylcellulose which, when in a 2 percent aqueous solution, exhibits a viscosity of 4,000 cps (mPa.s) at 20°C was prepared by the following procedure and tested for its ability to impart high temperature viscosity properties to a solution. 2.25 Grams of the above described methylcellulose was dispersed by stirring in 97.75 g of water at 95°C in a 1-liter beaker. The solution was then allowed to cool to room temperature (20°C), placed in a sealed jar, and allowed to stand overnight at room temperature to allow the solution to come to a viscosity equilibrium. The viscosity of the solution was then measured by rotational viscometry using a Brookfield RVT Rotational Viscometer set at 5 rpm and using a No. 4 spindle. The data is reported under Example C-2 in Table I. The jar of solution was then immersed in a water bath set at 40°C and allowed to equilibrate at the water bath temperature for a period of 3 hours. The viscosity of the solution was then measured in the same manner as discussed above with regard to the solution at room temperature. The data is reported under Example C-2 in Table I. The viscosity of the solution was measured in a similar manner for solutions which have been immersed in water baths set at 60°, 80° and 95°C. The results are reported under Example C-2 in Table I.

In a similar manner, the procedure of Comparative Example 2 was repeated except that 2.25 g of a hydroxypropyl methylcellulose which, when in a 2 percent aqueous solution, exhibits a viscosity of 4,000 cps (mPa.s) at 20°C. The viscosity of the solution was measured in a similar manner and the results are reported in Table I under Example C-2A.

The data illustrate that, when methylcellulose or hydroxypropyl methylcellulose are used alone as thickening compositions, neither is able to maintain a desirable viscosity at the elevated temperatures.

Comparative Example 3

For the purposes of comparison only, samples of a thickening composition, based on starch and cellulose ethers other than methylcellulose, were prepared by the following procedure and tested for their ability to impart high-temperature viscosity properties to a solution.

4.25 Grams of a 3:1 ratio of Thin-n-Thik™ 99 and Sta-Mist™ 365 modified starch was dispersed by stirring in 94.75 g of water at 20°C in a 1-liter beaker. The dispersion was heated to 95°C for a period of time sufficient to insure the gelatinization of the starch granules, about 10 minutes. To the hot solution was added 1 g of a hydroxypropyl methylcellulose ether which, when in a 2 percent aqueous solution, exhibits a viscosity of 4,000 cps (mPa.s) at 20°C, with stirring. The stirred solution was allowed to cool to room temperature (20°C), placed in a sealed jar, and allowed to stand overnight at room temperature to allow the solution to come to a viscosity equilibrium. The viscosity of the solution was then measured by rotational viscometry using a Brookfield RVT Rotational Viscometer set at 2.5 rpm and using a No. 3 spindle. The data is reported under Example C-3 in Table I. The jar of solution was then immersed in a water bath set at 40°C and allowed to equilibrate at the water bath temperature for a period of 3 hours. The viscosity of the solution was then measured in the same manner as discussed above with regard to the solution at room temperature. The data is reported under Example C-3 in Table I. The viscosity of the solution was measured in a similar manner for solutions which have been immersed in water baths set at 60°, 80° and 95°C. The results are reported under Example C-3 in Table I.

A similar run was done using a hydroxypropyl methylcellulose ether as the second component in the thickening composition. This particular cellulose ether, when in a 2 percent aqueous solution, exhibits a viscosity of about 100,000 cps (mPa.s) at a temperature of 20°C. The comparative run was measured for viscosity by the same method as discussed above. The results are reported under Example C-4 in Table I.

A similar run was done using a methylcellulose ether as the second component in the thickening composition. This particular cellulose ether, when in a 2 percent aqueous solution, exhibits a viscosity of about 4,000 cps (mPa.s) at a temperature of 20°C. The comparative run was measured for viscosity by the same method as discussed above. The results are reported under Example C-5 in Table I.

A similar run was done using a methylcellulose ether as the second component in the thickening composition. This particular cellulose ether, when in a 2 percent aqueous solution, exhibits a viscosity of about 15,000 cps (mPa.s) at a temperature of 20°C. The comparative run was measured for viscosity by the same method as discussed above. The results are reported under Example C-6 in Table I.

The data illustrate that certain cellulose ethers when combined with starch to form a thickening composition do not exhibit the desirable high temperature viscosity control that the present invention does.

The following examples illustrate the present invention.

Example 1

4.25 Grams of a 3:1 ratio of Thin-n-Thik™ 99 and Sta-Mist™ 365 modified starch was dispersed by stirring in 94.75 g of water at 20°C in a 1 liter beaker. The dispersion was then heated to 95°C for a period of time sufficient to insure the gelatinization of the starch granules, about 10 minutes. To the hot starch solution was added with stirring 1.0 g of methylcellulose which, when in a 2 percent aqueous solution, exhibits a viscosity of 15 cps (mPa.s) at 20°C. The solution was stirred for 10 minutes. Stirring was continued and the solution was allowed to cool to room temperature (20°C), placed in a sealed jar, and allowed to stand overnight at room temperature to allow the solution to come to a viscosity equilibrium. The solution was then measured for viscosity by rotational viscometry using a Brookfield RVT Rotational Viscometer set at 2.5 rpm and using a No. 3 spindle. The data is reported under Example 1 in Table I. The jar of solution was then immersed in a water bath set at 40°C and allowed to equilibrate at the water bath temperature for a period of 3 hours. The viscosity of the solution was then measured in the same manner as discussed above with regard to the solution at room temperature. The data is reported under Example 1 in Table I. The viscosity of the solution was measured in a similar manner for solutions which have been immersed in water baths set at 60°, 80° and 95°C. The results are reported in Table I under Example 1.

The procedure was repeated except that 2.9 g of Kol Guard™ starch was used instead of the 4.25 g of modified starch. The viscosities of the solution were measured in the same manner and the results are reported in Table I under Example 1A.

Example 2

4.25 grams of a 3:1 ratio of Thin-n-Thik™ 99 and Sta-Mist™ 365 modified starch was dispersed by stirring in 94.75 g of water at 20°C in a 1-liter beaker. The dispersion was heated to 95°C for a period of time sufficient to insure the gelatinization of the starch granules, about 10 minutes. To the hot starch solution was added with stirring 1.0 g of methylcellulose which, when in a 2 percent aqueous solution, exhibits a viscosity of 400 cps (mPa.s) at 20°C. The solution was stirred for 10 minutes. Stirring was continued and the solution was allowed to cool to room temperature (20°C), placed in a sealed jar and allowed to stand overnight at room temperature to allow the solution to come to a viscosity equilibrium. The solution was then measured for viscosity by rotational viscometry using a Brookfield RVT Rotational Viscometer set at 2.5 rpm and using a No. 3 spindle. The data is reported under Example 2 in Table I. The jar of solution was then immersed in a water bath set at 40°C and allowed to equilibrate at the water bath temperature for a period of 3 hours. The viscosity of the solution was then measured in the same manner as discussed above with regard to the solution at room temperature. The data is reported under Example 2 in Table I. The viscosity of the solution was measured in a similar manner for solutions which have been immersed in water baths set at 60°, 80° and 95°C.

The results are reported in Table I under Example 2.

The procedure was repeated except that 2.9 g of Kol Guard™ starch was used instead of the 4.25 g of modified starch. The viscosity of the solution was measured in the same manner and the results are reported in Table I under Example 2A.

## TABLE I

### Viscosity (cps) of Solution as a Function of Temperature (°C)

| Example | Methylcellulose ether, (viscosity) (cps = mPa·s) | Temperature | | | | |
|---|---|---|---|---|---|---|
| | | 20 | 40 | 60 | 80 | 95 |
| C-1* | None | 6,400 | 5,360 | 3,187 | 1,947 | 1,733 |
| C-1Λ* | None | 9,360 | 10,040 | 7,960 | 7,520 | 7,160 |
| C-2* | methylcellulose ether, 4,000 cps | 5,520 | gel | gel | gel | gel |
| C-2Λ* | hydroxypropyl methylcellulose ether, 4,000 cps | 4,760 | 1,120 | 1,000 | 800 | gel |
| C-3* | hydroxypropyl methylcellulose ether, 4,000 cps | 15,120 | 9,460 | 5,700 | 3,500 | 3,420 |
| C-4* | hydroxypropyl methylcellulose ether, 100,000 cps | 163,300 | 72,900 | 18,480 | 7,280 | 7,020 |
| C-5* | methylcellulose ether, 4,000 cps | 17,213 | 20,360 | 8,653 | 4,920 | 15,200 |
| C-6* | methylcellulose ether, 15,000 cps | 16,120 | 17,900 | 16,200 | 8,340 | 6,220 |
| 1 | methylcellulose ether, 15 cps | 2,120 | 4,270 | 15,100 | 13,680 | 12,960 |
| 1Λ | methylcellulose ether, 15 cps | 360 | 360 | 12,700 | 17,680 | 19,600 |
| 2 | methylcellulose ether, 400 cps | 7,573 | 8,387 | 11,053 | 7,293 | 17,080 |
| 2Λ | methylcellulose ether, 400 cps | 2,740 | 3,280 | 14,840 | 13,540 | 13,200 |

*Not an example of the present invention.

The data in Table I indicate that the present invention imparts viscosity control over a wide range of temperatures and does not lose its thickening capability at elevated temperatures.

**Claims**

1. A food thickening composition comprising a blend of (1) a starch and (2) a methylcellulose ether having a molecular weight sufficient to exhibit a viscosity from 3 to 3500 mPa.s (cps) in a 2 percent aqueous solution at $20^0$C, in the weight ratio of the starch to methylcellulose ether from 2:1 to 28:1 whereby, when the blend of starch and methylcellulose ether is used in an amount up to 5 percent by weight of a total food product, the viscosity of a thickened food product at an elevated temperature from $40^0$C to $100^0$C is substantially equal to or greater than the viscosity of the thickened food product at a temperature from $15^0$C to $25^0$C prior to the thickened food product being heated to the elevated temperature.

2. A composition of Claim 1, wherein the starch is a food approved starch comprising an unmodified or modified glucose polymer of vegetable origin.

3. A composition of Claim 2, wherein the starch is unmodified, unsubstituted corn starch; instantized, unsubstituted corn starch; instantized, hydroxypropylated corn starch; or instantized, succinylated corn starch.

4. A composition of any of the preceding claims, wherein the methylcellulose ether has a molecular weight sufficient to exhibit a viscosity from 10 to 1,000 mPa.s (cps) in a 2 percent aqueous solution at $20^0$C.

5. A composition of Claim 4, wherein the methylcellulose ether has a molecular weight sufficient to exhibit a viscosity from 15 to 500 mPa.s (cps) in a 2 percent aqueous solution at $20^0$C.

6. A composition of any one of the preceding claims, wherein the methylcellulose ether has a molecular weight from 80,000 to 400,000.

7. A composition of any one of the preceding claims, wherein the ratio of starch to methylcellulose ether is from 4:1 to 12:1.

8. A method of thickening water-based food compositions which comprises:
   (a) incorporating a food thickening composition as defined in any one of the preceding claims with the food;
   (b) heating said mixture at a temperature and for a time period to effectively gelatinize said starch to form a homogeneous mixture; and
   (c) cooling said mixture.

9. A method of Claim 8, wherein the viscosity of the thickened food product at the elevated temperature is from 4,000 to 13,000 mPa.s (cps).

10. A method of Claim 8 or claim 9, wherein the thickened food product at the elevated temperature exhibits a viscosity of at least 200 percent of the viscosity of the food product at a temperature from $15^0$C to $25^0$C prior to heating the thickened food product to the elevated temperature.

11. A method of any one of Claims 8 to 10, wherein the starch is used in an amount from 3 to 7 percent of the total food product weight.

12. A method of any one of Claims 8 to 11, wherein the methylcellulose is used in an amount from 0.25 to 1.5 percent of the total food product weight.

13. A method of Claim 12, wherein the methylcellulose is used in an amount from 0.5 to 1.0 percent of the total food product weight.

14. A method of any one of Claims 8 to 13, wherein the elevated temperature is from $40^0$C to $95^0$C.

15. A food incorporating a thickening amount of a food thickening composition as defined in any one of the preceding claims.

**Patentansprüche**

1. Zusammensetzung zum Verdicken von Nahrungsmittel, enthaltend eine Mischung von (1) einer Stärke und (2) einem Methylcelluloseether mit einem ausreichenden Molekulargewicht, um einer 2%igen wäßrigen Lösung bei 20°C eine Viskosität von 3-3500 mPa.s (cps) zu verleihen, in dem Gewichtsverhältnis Stärke:Methylcelluloseether von 2:1-28:1, wobei bei Verwendung der Mischung von Stärke und Methylcelluloseether in einer Menge bis zu 5 Gew.-%, bezogen auf Gesamtnahrungsmittelprodukt, die Viskosität des verdickten Nahrungsmittelproduktes bei einer erhöhten Temperatur von 40°C-100°C im wesentlichen gleich oder größer ist als die Viskosität des verdickten Nahrungsmittelproduktes bei einer Temperatur von 15°C-25°C, bevor das verdickte Nahrungsmittel auf erhöhte Temperatur erwärmt wurde.

2. Zusammensetzung nach Anspruch 1,
   **dadurch gekennzeichnet,**
   daß die Stärke eine zugelassene Nahrungsmittelstärke ist, die nichtmodifiziertes oder modifiziertes Glukosepolymer aus pflanzlicher Quelle enthält.

3. Zusammensetzung nach Anspruch 2,
   **dadurch gekennzeichnet,**
   daß die Stärke nichtmodifizierte, nichtsubstituierte Maisstärke, schnell lösliche, nichtsubstituierte Maisstärke, schnell lösliche, hydroxypropylierte Maisstärke oder schnell lösliche, succinylierte Maisstärke ist.

4. Zusammensetzung nach jedem der vorstehenden Ansprüche,
   **dadurch gekennzeichnet,**
   daß der Methylcelluloseether ein ausreichendes Molekulargewicht hat, um einer 2%igen wäßrigen Lösung bei 20°C eine Viskosität von 10-1000 mPa.s (cps) zu verleihen.

5. Zusammensetzung nach Anspruch 4,
   **dadurch gekennzeichnet,**
   daß der Methylcelluloseether ein ausreichendes Molekulargewicht hat, um einer 2%igen wäßrigen Lösung bei 20°C eine Viskosität von 15-500 mPa.s (cps) zu verleihen.

6. Zusammensetzung nach jedem der vorstehenden Ansprüche,
   **dadurch gekennzeichnet,**
   daß der Methylcelluloseether ein Molekulargewicht von 80.000-400.000 aufweist.

7. Zusammensetzung nach jedem der vorstehenden Ansprüche,
   **dadurch gekennzeichnet,**
   daß das Verhältnis von Stärke:Methylcelluloseether von 4:1-12:1 beträgt.

8. Verfahren zum Verdicken auf Wasser,basierender Nahrungsmittelzusammensetzungen durch
   a) Einbringen einer Zusammensetzung zum Verdicken von Nahrungsmittel nach jedem der vorstehenden Ansprüche in das Nahrungsmittel,
   b) Erwärmen der Mischung auf eine Temperatur und für eine Zeit, um die Stärke wirksam zu gelatinieren, um eine homogene Mischung auszubilden, und
   c) Abkühlen der Mischung.

9. Verfahren nach Anspruch 8,
   **dadurch gekennzeichnet,**
   daß die Viskosität des verdickten Nahrungsmittelproduktes bei erhöhter Temperatur von 4000-13000 mPa.s (cps) beträgt.

10. Verfahren nach Anspruch 8 oder 9,
    **dadurch gekennzeichnet,**
    daß das verdickte Nahrungsmittelprodukt bei erhöhter Temperatur eine Viskosität von mindestens 200% der Viskosität des Nahrungsmittelproduktes bei einer Temperatur von 15°-25°C vor dem Erwärmen des verdickten Nahrungsmittelproduktes auf erhöhte Temperatur aufweist.

11. Verfahren nach jedem der Ansprüche 8-10,

**dadurch gekennzeichnet,**
daß die Stärke in einer Menge von 3-7% des Gesamtnahrungsmittelproduktgewichtes verwendet wird.

12. Verfahren nach jedem der Ansprüche 8-11,
    **dadurch gekennzeichnet,**
    daß die Methylcellulose in einer Menge von 0,25-1,5% des Gesamtnahrungsmittelproduktgewichtes verwendet wird.

13. Verfahren nach Anspruch 12,
    **dadurch gekennzeichnet,**
    daß die Methylcellulose in einer Menge von 0,5-1,0% des Gesamtnahrungsmittelproduktgewichtes verwendet wird.

14. Verfahren nach jedem der Ansprüche 8-13,
    **dadurch gekennzeichnet,**
    daß die erhöhte Temperatur von 40°C-95°C beträgt.

15. Nahrungsmittel, das eine verdickende Menge einer Zusammensetzung zum Verdicken von Nahrungsmittel nach jedem der vorstehenden Ansprüche enthält.

**Revendications**

1. Composition d'épaississant alimentaire, comprenant un mélange de (1) un amidon et (2) un éther méthylique de cellulose dont la masse moléculaire est suffisante pour qu'il présente une viscosité de 3 à 3500 mPa.s (cps) en solution aqueuse à 2 % à 20°C, en un rapport pondéral de 2:1 à 28:1 de l'amidon à l'éther méthylique de cellulose, grâce à quoi, quand on utilise le mélange d'amidon et d'éther méthylique de cellulose en une quantité représentant jusqu'à 5 % du poids total d'un produit alimentaire, la viscosité du produit alimentaire épaissi à une température élevée, valant de 40°C à 100°C, est pratiquement égale ou supérieure à la viscosité qu'avait le produit alimentaire épaissi à une température de 15°C à 25°C, avant d'être chauffé à ladite température élevée.

2. Composition selon la revendication 1, dans laquelle l'amidon est un amidon alimentaire agréé comprenant un polymère de glucose, modifié ou non, d'origine végétale.

3. Composition selon la revendication 2, dans laquelle l'amidon est un amidon de maïs non substitué et non modifié, un amidon de maïs non substitué et instantanéisé, un amidon de maïs hydroxypropylé et instantanéisé, ou un amidon de maïs succinylé et instantanéise.

4. Composition selon l'une quelconque des revendications précédentes, dans laquelle l'éther méthylique de cellulose possède une masse moléculaire suffisante pour qu'il présente une viscosité de 10 à 1000 mPa.s (cps) en solution aqueuse à 2 % à 20°C.

5. Composition selon la revendication 4, dans laquelle l'éther méthylique de cellulose possède une masse moléculaire suffisante pour qu'il présente une viscosité de 15 à 500 mPa.s (cps) en solution aqueuse à 2 % à 20°C.

6. Composition selon l'une quelconque des revendications précédentes, dans laquelle l'éther méthylique de cellulose possède une masse moléculaire de 80 000 à 400 000.

7. Composition selon l'une quelconque des revendications précédentes, dans laquelle le rapport de l'amidon à l'éther méthylique de cellulose vaut de 4:1 à 12:1.

8. Procédé d'épaississement de compositions alimentaires à base d'eau, qui comporte :
   (a) l'incorporation à l'aliment d'une composition d'épaississant alimentaire telle que définie dans l'une quelconque des revendications précédentes,
   (b) le chauffage de ce mélange à une température et pendant une durée suffisantes pour la gélatinisation effective dudit amidon et la formation d'un mélange homogène, et
   (c) le refroidissement dudit mélange.

**9.** Procédé selon la revendication 8, dans lequel la viscosité du produit alimentaire épaissi, à la température élevée, vaut de 4000 à 13 000 mPa.s (cps).

**10.** Procédé selon la revendication 8 ou la revendication 9, dans lequel le produit alimentaire épaissi présente, à la température élevée, une viscosité valant au moins 200 % de la viscosité du produit alimentaire à une température de 15°C à 25°C, avant le chauffage du produit alimentaire épaissi à la température élevée.

**11.** Procédé selon l'une quelconque des revendications 8 à 10, dans lequel on utilise l'amidon en une quantité représentant de 3 à 7 % du poids total du produit alimentaire.

**12.** Procédé selon l'une quelconque des revendications 8 à 11, dans lequel on utilise la méthylcellulose en une quantité représentant de 0,25 à 1,5 % du poids total du produit alimentaire.

**13.** Procédé selon la revendication 12, dans lequel on utilise la méthylcellulose en une quantité représentant de 0,5 à 1,0 % du poids total du produit alimentaire.

**14.** Procédé selon l'une quelconque des revendications 8 à 13, dans lequel la température élevée vaut de 40°C à 95°C.

**15.** Aliment dans lequel est incorporée une proportion épaississante d'une composition d'épaississant alimentaire telle que définie dans l'une quelconque des revendications précédentes.